**Europäisches Patentamt**

**European Patent Office**

**Office européen des brevets**

(19)

(11) Veröffentlichungsnummer: **0 173 067**
**A2**

(12) # EUROPÄISCHE PATENTANMELDUNG

(21) Anmeldenummer: **85109077.9**

(51) Int. Cl.⁴: **G 01 N 19/00, G 01 N 22/04**

(22) Anmeldetag: **19.07.85**

(30) Priorität: **20.07.84 DE 3426832**

(43) Veröffentlichungstag der Anmeldung: **05.03.86**
**Patentblatt 86/10**

(84) Benannte Vertragsstaaten: **AT BE CH DE FR GB IT LI LU NL SE**

(71) Anmelder: **W.L. Gore & Co. GmbH,
Wernher-von-Braun-Strasse 18, D-8011 Putzbrunn (DE)**

(72) Erfinder: **Schneider, Gerhard, Gartenweg 3,
D-8836 Ellingen (DE)**

(74) Vertreter: **Klunker, Hans-Friedrich, Dr. et al,
Patentanwälte Klunker . Schmitt-Nilson . Hirsch
Winzererstrasse 106, D-8000 München 40 (DE)**

(54) **Wassermeldevorrichtung, insbesondere für Öl- und Benzintanks.**

(57) Wassermeldevorrichtung, insbesondere für Öl- und Benzinbehälter, bei der innerhalb eines im Tank angeordneten Gehäuses zwei voneinander beabstandete Elektroden vorgesehen sind, die im Abstand vom Boden des Tankes angebracht sind und mittels eines Kabels mit einem außerhalb des Tankes befindlichen Anzeigegerätes verbunden sind, welches die Änderung des elektrischen Widerstandes zwischen den Elektroden anzeigt, wenn die Elektroden statt mit dem Öl oder Benzin von Wasser, bzw. einer wäßrigen Lösung umspült werden.

0173067

W.L. Gore & Co. GmbH
Wernher-von-Braun-Str. 18
8011 Putzbrunn

20. Juli 1984
G 5596
Wa/Sch

B e s c h r e i b u n g

---

Wassermeldevorrichtung, insbesondere für Öl- und Benzintanks

---

Die vorliegende Erfindung bezieht sich auf eine Wassermeldevorrichtung, die insbesondere zur Überwachung von Öl- und Benzintanks geeignet ist.

Auf dem Grunde von Öl- und Benzinbehältern findet sich für gewöhnlich eine Wasseransammlung, die durch Schwitzwasserbildung aber auch z.B. durch Unachtsamkeit oder durch eine mechanische Beschädigung entsteht. Das im Tank befindliche Wasser beschleunigt die Korrosion bei Stahltanks und kann, wenn der Wasserstand so hoch ist, daß das Wasser von den nachfolgenden Einrichtungen angesaugt wird, zu Betriebsstörungen und zum vorzeitigen Ausfall dieser Einrichtungen führen. Um derartige Störungen zu vermeiden und um einen Wassereinbruch im Behälter erkennen zu können, ist es wünschenswert, Informationen über das im Tank befindliche Wasser zu haben.

Es ist deshalb die Aufgabe der vorliegenden Erfindung, eine Wassermeldevorrichtung zu schaffen, die einfach und kostengünstig herstellbar ist und die in zuverlässiger Weise das Vorhandensein von Wasser im Tank meldet, wobei je nach Einsatzfall eine bestimmte Wassermenge toleriert wird.

Dies wird bei einer Wassermeldevorrichtung gemäß dem Oberbegriff erfindungsgemäß durch die im Anspruch 1 angegebenen Merkmale gelöst.

Diese erfindungsgemäße Lösung zeigt im Tank befindliches Wasser mit sehr großer Zuverlässigkeit an. Die Sensoren sind in einem bestimmten Abstand vom Boden des Tankes angebracht und erstrecken sich vorzugsweise in senkrechter Richtung. Solange nur Öl oder Benzin im Tank vorhanden ist, welche bekanntermaßen elektrisch nicht-leitend sind, wird an dem Anzeigegerät der Gesamtwiderstand aus dem Leitungswiderstand und dem parallel zu den beiden Elektroden geschalteten hochohmigen Widerstand angezeigt. Sobald der Wasserstand im Tank so hoch wird, daß die Elektroden von dem Wasser, beziehungsweise von einer Wasser-Öl-Mischung umspült werden, verringert sich der elektrische Widerstand zwischen den Elektroden, worauf das Anzeigegerät das Vorhandensein von Wasser im Tank meldet. Es sei an dieser Stelle ausdrücklich darauf hingewiesen, daß die Wassermeldevorrichtung auch ohne einen zwischengeschalteten hochohmigen Widerstand funktionieren kann, in diesem Fall können sich jedoch Probleme mit dem sich durch die Temperatur ändernden elektrischen Widerstand der Zuleitungen, mit der Länge der Zuleitung selbst, und mit der Empfindlichkeit der Anzeige des Systems ergeben. Aus diesem Grunde ist die Zwischenschaltung des hochohmigen Widerstandes zweckmäßig, wobei man üblicherweise einen Widerstandswert von etwa 100 k$\Omega$ wählen wird.

Die erfindungsgemäße Wassermeldevorrichtung hat den großen Vorteil, daß sie so ausgeführt werden kann, daß sie ohne Probleme in einen Tank eingebaut werden kann und insbesondere, daß sie ohne Probleme in einen bereits vorhandenen, unter Umständen auch bereits mit Öl gefüllten Behälter integriert werden kann. Dazu wird die Wassermeldevorrichtung so gestaltet, daß Sie einen umschreibenden Zylinderumfang hat, der so bemessen ist, daß die Vorrichtung durch die üblichen Einfüll- bzw. Kontrollöffnungen in den Behälter eingebaut werden kann.

Besonders vorteilhaft ist es, die Wassermeldevorrichtung so zu gestalten, daß ein schwerer, aus Metall bestehender, unterer Teil ausgeführt wird, auf dem ein leichterer Teil z. B. aus Kunststoff angebracht ist. Das zur Verbindung mit dem Anzeigegerät notwendige Kabel wird in dem oberen Teil der Wassermeldevorrichtung derart geführt, daß die Vorrichtung mit diesem Kabel durch eine Öffnung in den Tank herabgelassen werden kann und mit dem unteren metallischen Teil einen festen Halt auf den Boden des Tankes findet. Um den Zufluß der Flüssigkeit in das untere metallische Gehäuse zu erleichtern, wird dieses mit Bohrungen versehen. Probleme können dabei mit der Adhäsion des Öles an den metallischen Teilen bestehen. Aus diesem Grund werden die Metallteile vorzugsweise verchromt oder aus Edelstahl hergestellt und mit möglichst scharfen Kanten versehen, an denen das Öl nur schlecht haften kann.

Besonders günstig ist es, die Elektroden so anzubringen, daß ihre Höhe in bezug zu dem unteren metallischen Teil, auf dem die Wassermeldevorrichtung im Tank ruht, verändert werden kann. Dadurch kann der für die tolerierbare Wassermenge bestimmende Abstand der Elektroden vom Tankboden eingestellt und somit den Erfordernissen des jeweiligen Einsatzes angepaßt werden.

Das für die Verbindung zum Anzeigegerät verwendete Kabel muß mit einer Umhüllung versehen werden, die unempfindlich gegenüber den in dem Tank befindlichen Flüssigkeiten ist. Gleichzeitig wird man darauf achten, daß die Umhüllung möglichst scheuerfest ist, damit das Kabel nicht mechanisch beschädigt wird. Um eine Verfälschung der Anzeige durch elektrische Störfelder zu vermeiden, wird es des weiteren günstig sein, dieses Kabel elektrisch abzuschirmen.

Als besonderer Vorteil der erfindungsgemäßen Wassermeldevorrichtung soll noch genannt werden, daß diese Vorrichtung in sehr einfacher und kostengünstiger Weise hergestellt werden kann. Die Betreiber von Tankanlagen erhalten somit eine sehr wirtschaftliche Möglichkeit, Wasseransammlungen im Tank, die zur Korrosion führen, bzw. einen Wassereinbruch in den Tank durch eine mechanische Beschädigung, schnell festzustellen, so daß die Gefährdung des Grundwassers durch derartige Tankanlagen wesentlich vermindert wird.

Weitere Vorteile, Merkmale und Anwendungsmöglichkeiten der vorliegenden Erfindung ergeben sich aus der nachfolgenden Beschreibung im Zusammenhang mit der Zeichnung. Darin zeigt:

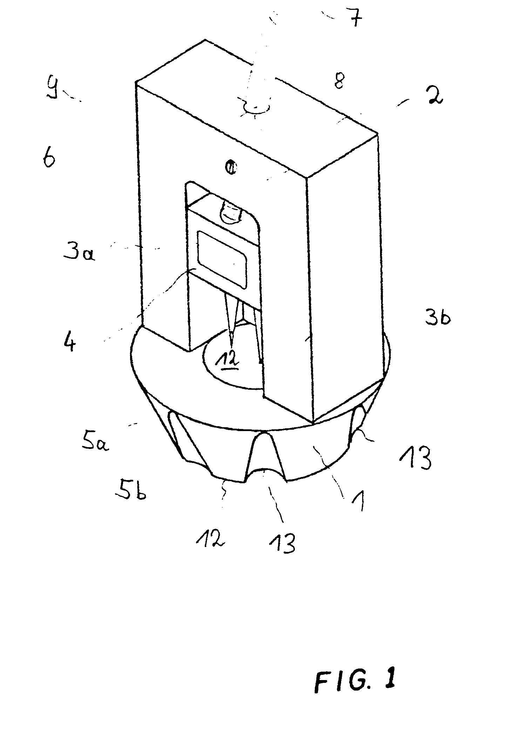

Figur 1      eine perspektivische Ansicht eines Ausführungsbeispieles der vorliegenden Erfindung.

Die Figur 1 zeigt ein vorteilhaftes Ausführungsbeispiel der vorliegenden Erfindung, welches aus einem metallischen Unterteil 1 und aus einem Oberteil 2 aus Kunststoff besteht. Das Oberteil 2 ist U-förmig mit zwei parallelen Schenkeln 3a und 3b ausgebildet. Zwischen diesen Schenkeln ist ein Quersteg 4 beweglich angeordnet, der die Elektroden 5a und 5b aufnimmt. Der Quersteg 4 wird vor Einführung der erfindungsgemäßen Wassermeldevorrichtung so zwischen den beiden Schenkeln 3a, 3b des Oberteils 2 eingestellt, daß die Elektroden den gewünschten Abstand von der Aufstandfläche 11 des Unterteils 1 haben. Der Quersteg 4 wird in an sich bekannter Weise mit Schrauben oder ähnlichen zwischen den Schenkeln 3a, 3b fixiert, was in der Zeichnung nicht näher dargestellt ist.

In dem Quersteg 4 ist innerhalb einer Öffnung 6 der hoch-ohmige Widerstand eingegossen. Dies bedeutet, daß die Öffnung 6 nach Einlegen des Widerstandes und nach dem Verbinden des Widerstandes mit den Elektroden mit einem

0173067

geeigneten Kunstharz ausgegossen wurde, so daß die Oberfläche der Öffnung 6 glatt mit dem Quersteg 4 abschließt. Das Anschlußkabel 7 ist innerhalb des Quersteges 4 mit den beiden Elektroden verbunden und wird durch eine Öffnung 8 durch das Oberteil 2 hinausgeführt. Die Öffnung 8 sollte mit der senkrechten Schwerachse der Wassermeldevorrichtung zusammenfallen, damit beim Einführen der Vorrichtung in den Tank eine senkrechte Lage derselben gewährleistet ist. Zur Aufnahme der Zugkräfte wird in an sich bekannter Weise eine Quetschschraube 9 im Oberteil 2 verwendet.

Das Unterteil 1 ist ringförmig ausgebildet. Es ist demzufolge möglich, die Elektroden 5a, 5b je nach Einsatzbedingungen bis unmittelbar an den Tankboden heranzuführen. Das Unterteil 1 läuft kegelförmig zu, wobei der untere Rand 11, der gleichzeitig die Aufstandfläche ist, scharfkantig ausgebildet ist. Um die Durchströmung des Inneren zu verbessern, sind um den Ringumfang mehrere angeschrägte Öffnungen 13 vorgesehen.

Die Elektroden werden, wie in diesem Ausführungsbeispiel dargestellt, vorzugsweise spitz ausgeführt, um ein Anhaften des Öls, welches die Anzeige beeinträchtigen könnte, zu vermindern.

Das Kabel 7 ist als zweipoliges Kabel ausgeführt, mit einer Abschirmung und mit einer scheuerfesten Umhüllung aus ölbeständigem Material versehen.

P a t e n t a n s p r ü c h e

1. Wassermeldevorrichtung, insbesondere für Öl- und Benzin-behälter, dadurch g e k e n n z e i c h n e t , daß innerhalb eines im Tank angeordneten Gehäuses zwei voneinander beabstandete Elektroden (5a, 5b) vorgesehen sind, die im Abstand vom Boden des Tankes angebracht sind und mittels eines Kabels (7) mit einem außerhalb des Tankes befindlichen Anzeigegerätes verbunden sind, welches die Änderung des elektrischen Widerstandes zwischen den Elektroden anzeigt, wenn die Elektroden statt mit dem Öl oder Benzin von Wasser, bzw. einer wäßrigen Lösung umspült werden.

2. Wassermeldevorrichtung gemäß Anspruch 1, dadurch gekennzeichnet, daß die Elektroden (5a, 5b) über einen hochohmigen Widerstand miteinander verbunden sind.

3. Wassermeldevorrichtung gemäß einem der Ansprüche 1 oder 2, dadurch gekennzeichnet, daß der Abstand der Elektroden vom Boden des Tankes veränderbar ist.

4. Wassermeldevorrichtung gemäß einem der vorhergehenden Ansprüche, dadurch gekennzeichnet, daß das Gehäuse einen unteren schweren Teil (1) und einen oberen leichten Teil (2) aufweist, derart, daß es auf dem Boden des Tanks in der richtigen Lage feststeht.

5. Wassermeldevorrichtung gemäß Anspruch 4, dadurch gekennzeichnet, daß der untere schwere Teil (1) aus Metall und der obere leichte Teil (2) aus Kunststoff besteht.

6. Wassermeldevorrichtung gemäß Anspruch 5, dadurch gekennzeichnet, daß der metallische Teil verchromt ist oder aus Edelstahl besteht.

7. Wassermeldevorrichtung gemäß einem der Ansprüche 5 bis 6, dadurch gekennzeichnet, daß der dem Boden des Tankes zugewandte Teil des unteren Teils mit scharfen Kanten (11) versehen ist.

8. Wassermeldevorrichtung gemäß einem der Ansprüche 4 bis 7, dadurch gekennzeichnet, daß das untere Teil (1) ringförmig ausgebildet ist und Öffnungen (13) zur besseren Durchströmung der Flüssigkeit aufweist.

9. Wassermeldevorrichtung gemäß einem der vorhergehenden Ansprüche, dadurch gekennzeichnet, daß die Elektroden (5a, 5b) senkrecht angeordnet sind und spitz oder keilförmig zulaufen.

10. Wassermeldevorrichtung gemäß einem der vorhergehenden Ansprüche, dadurch gekennzeichnet, daß der hochohmige Widerstand in das obere Teil aus Kunststoff eingegossen ist.

0173067

11. Wassermeldevorrichtung gemäß einem der vorhergehenden Ansprüche, dadurch gekennzeichnet, daß das Kabel( 7) zur Verbindung mit dem Anzeigegerät abgeschirmt ist und mit einer ölfesten Umkleidung versehen ist.

12. Wassermeldevorrichtung gemäß einem der vorhergehenden Ansprüche, dadurch gekennzeichnet, daß die Vorrichtung einen umschreibenden Zylinder aufweist, dessen Durchmesser kleiner als 48 mm ist.

FIG. 1